# FASCICULE DE BREVET EUROPEEN

(11) **EP 2 310 213 B1**
(45) Date de publication et mention de la délivrance du brevet: **01.02.2012**
(21) Numéro de dépôt: 09772447.0
(22) Date de dépôt: 30.06.2009
(51) Int. Cl.: B60C 9/20

(54) **SOMMET POUR PNEUMATIQUE D'AVION**
REIFENLAUFFLÄCHENKRONE FÜR EIN FLUGZEUG
TIRE CROWN FOR AN AIRPLANE

(30) Priorité: 30.06.2008 FR 0854371
(43) Date de publication de la demande: 20.04.2011
(73) Titulaire: Société de Technologie MICHELIN, 63000 Clermont-Ferrand (FR); MICHELIN Recherche et Technique S.A., 1763 Granges-Paccot (CH)
(72) Inventeur: CHAMBRIARD, François, F-63110 Beaumont (FR); MORANNE-BEAUFILS, Sophie, F-63350 Gerzat (FR)
(74) Mandataire: Le Cam, Stéphane Georges Elie
(86) Numéro de dépôt international: PCT/EP2009/058202
(87) Numéro de publication internationale: WO 2010/000747

(56) Documents cités:
- FR-A- 2 499 475
- US-A- 3 735 791
- US-A- 4 947 914
- US-A- 5 078 191

## Description

La présente invention est relative à un pneumatique d'avion, dont l'usage se caractérise par des conditions de pression, de charge et de vitesse élevées et, en particulier, dont la pression nominale est supérieure à 9 bars et la flèche sous charge nominale supérieure à 30%.

Par défmition, la flèche sous charge nominale d'un pneumatique est sa déformation radiale, ou variation relative de hauteur radiale, lorsque celui-ci passe d'un état gonflé non chargé à un état gonflé chargé en statique, dans les conditions de pression et de charge nominales, définies par les normes de la Tyre and Rim Association. Elle est définie par le rapport de la variation de la hauteur radiale du pneumatique sur la moitié de la différence entre le diamètre extérieur du pneumatique et le diamètre maximum de la jante mesuré sur le crochet de jante. Le diamètre extérieur du pneumatique est mesuré en statique dans un état non chargé gonflé à la pression nominale.

Dans ce qui suit, on désigne par:
- « Plan équatorial »: le plan perpendiculaire à l'axe de rotation du pneumatique et passant par le milieu de la surface de roulement du pneumatique.
- « Plan méridien »: un plan contenant l'axe de rotation du pneumatique.
- « Direction radiale »: une direction perpendiculaire à l'axe de rotation du pneumatique.
- « Direction circonférentielle »: une direction perpendiculaire à un plan méridien.
- « Direction axiale »: une direction parallèle à l'axe de rotation du pneumatique.
- « Distance radiale »: une distance mesurée perpendiculairement à l'axe de rotation du pneumatique et à partir de l'axe de rotation du pneumatique.
- « Distance axiale »: une distance mesurée parallèlement à l'axe de rotation du pneumatique et à partir du plan équatorial.
- « Radialement intérieur à, respectivement radialement extérieur à»: dont la distance radiale est inférieure à, respectivement supérieure à.
- « Axialement intérieur à, respectivement axialement extérieur à»: dont la distance axiale est inférieure à, respectivement supérieure à.

Bien que non limitée à celui-ci, l'invention est plus particulièrement décrite en référence à un pneumatique d'avion, dont l'architecture est présentée dans le document EP 1 381 525, et appelé, dans la suite, pneumatique usuel.

Un tel pneumatique comprend une bande de roulement, destinée à venir en contact avec le sol et réunie à deux bourrelets par l'intermédiaire de deux flancs, chaque bourrelet assurant la liaison du pneumatique avec une jante de montage.

La bande de roulement, qui comprend au moins un et le plus souvent plusieurs sillons circonférentiels, est destinée à venir en contact avec le sol par l'intermédiaire d'une surface de roulement.

Le pneumatique comprend en outre une armature de renforcement, constituée d'une armature de sommet, radialement intérieure à la bande de roulement, et d'une armature de carcasse radiale, radialement intérieure à l'armature de sommet.

L'armature de sommet d'un pneumatique d'avion comporte habituellement au moins une couche d'éléments de renforcement enrobés par un mélange élastomérique et parallèles entre eux. La largeur axiale de l'armature de sommet est la largeur axiale maximale de couche d'armature de sommet.

L'armature de carcasse radiale d'un pneumatique d'avion comporte habituellement au moins une couche d'éléments de renforcement enrobés par un mélange élastomérique, parallèles entre eux et orientés sensiblement radialement, c'est-à-dire faisant, avec la direction circonférentielle, un angle compris entre 85° et 95°.

Les éléments de renforcement des couches d'armature de sommet ou d'armature de carcasse, pour les pneumatiques d'avion, sont le plus souvent des câbles, tels que, par exemple, des câbles en polyamides aliphatiques et/ou en polyamides aromatiques. Des câbles sont dits hybrides, au sens du document EP 1 381 525, s'ils sont constitués à la fois de polyamides aliphatiques et de polyamides aromatiques.

Sur les pneumatiques d'avion en général, il a été constaté la présence d'une usure non uniforme de la bande de roulement, appelée usure irrégulière, résultant des sollicitations au cours des différentes phases de vie du pneumatique: décollage, roulage et atterrissage. Il a été plus particulièrement mis en évidence une usure différentielle de la bande roulement entre une partie médiane et les deux parties latérales de la bande de roulement, axialement extérieures à la partie médiane, l'usure de cette partie médiane étant plus importante. L'usure différentielle de la partie médiane de la bande de roulement entraîne une limitation de la durée de vie du pneumatique, donc de son utilisation et son retrait prématuré, bien que la bande de roulement ne présente généralement qu'une relativement faible usure des parties latérales de la bande de roulement : ce qui est pénalisant sur le plan économique.

Il est connu de l'homme du métier que l'usure de la bande de roulement d'un pneumatique dépend de plusieurs facteurs liés à l'usage et à la conception du pneumatique, dont, en particulier, la forme géométrique de la surface de contact du pneumatique avec le sol et la répartition des contraintes mécaniques dans cette surface de contact, ces deux critères dépendant eux-mêmes du profil méridien gonflé de la surface de roulement. Le profil méridien gonflé de la surface de roulement est la coupe de la surface de roulement, sans prise en compte des sillons circonférentiels, par un plan méridien, pour un pneumatique gonflé à sa pression nominale et non chargé.

Pour augmenter la durée de vie du pneumatique, vis-à-vis de l'usure différentielle de la partie médiane de la bande de roulement, l'homme du métier a cherché à optimiser la forme géométrique du profil méridien gonflé de la surface de roulement.

Le document EP 1 163 120 présente une armature de sommet d'un pneumatique d'avion, dont on cherche à limiter les déformations radiales lors du gonflage du pneumatique à sa pression nominale, et, par conséquent, les déformations radiales du profil méridien initial de la surface de roulement. La limitation des déformations radiales de l'armature de sommet, lors du gonflage du pneumatique à sa pression nominale, est obtenue par une augmentation des rigidités d'extension circonférentielles des couches d'armature de sommet, obtenue par le remplacement des éléments de renforcement des couches d'armature de sommet, usuellement en polyamides aliphatiques par des éléments de renforcement en polyamides aromatiques. Les modules d'élasticité des éléments de renforcement en polyamides aromatiques étant supérieurs à ceux des éléments de renforcement en polyamides aliphatiques, les allongements des premiers, pour une sollicitation en extension donnée, sont plus faibles que ceux des seconds.

Le document EP 1 381 525 précédemment cité propose une voie d'action sur la forme géométrique du profil méridien gonflé de la surface de roulement en faisant évoluer les rigidités d'extension des couches d'armature de sommet et/ou de carcasse. Ce document propose l'utilisation d'éléments de renforcement hybrides, c'est-à-dire constitués à la fois de polyamides aliphatiques et de polyamides aromatiques, à la place des usuels éléments de renforcement en polyamides aliphatiques. Ces éléments de renforcement hybrides ont des modules d'élasticité supérieurs à ceux des éléments de renforcement en polyamides aliphatiques, donc ont des allongements plus faibles, pour une sollicitation en extension donnée. Les éléments de renforcement hybrides sont utilisés dans les couches d'armature de sommet, pour augmenter les rigidités d'extension circonférentielles, et/ou dans les couches d'armature de carcasse, pour augmenter les rigidités d'extension dans le plan méridien.

Enfin le document EP 1 477 333 propose une autre voie d'action sur la forme géométrique du profil méridien gonflé de la surface de roulement en faisant évoluer axialement la rigidité d'extension circonférentielle globale de l'armature de sommet, de telle sorte que le rapport entre les rigidités d'extension circonférentielles globales des parties axialement les plus extérieures de l'armature de sommet et de la partie médiane de l'armature de sommet soit compris dans un intervalle défini. La rigidité d'extension circonférentielle globale de l'armature de sommet résulte de la combinaison des rigidités d'extension circonférentielles des couches d'armature de sommet. La rigidité d'extension circonférentielle globale de l'armature de sommet varie dans la direction axiale, en fonction de l'évolution du nombre de couches d'armature de sommet superposées. La solution proposée est basée sur une répartition axiale des rigidités d'extension circonférentielles globales entre la partie médiane et les parties axialement les plus extérieures de l'armature de sommet, la partie médiane étant plus rigide que les parties axialement les plus extérieures de l'armature de sommet. Les éléments de renforcement utilisés dans les couches d'armature de sommet ou de carcasse sont en polyamides aliphatiques, en polyamides aromatiques ou hybrides.

Un pneumatique pour avion dont la bande de roulement a une courbure radiale négative à l'état non gonflé est connu du document FR-A-2499475.

Les solutions présentées dans l'état de la technique précédemment décrit restent toutefois insuffisantes vis-à-vis de la réduction de l'usure irrégulière de la bande de roulement des pneumatiques équipant des avions de ligne et soumis à de fortes sollicitations, telles que, à titre d'exemples et de façon non limitative, une pression nominale supérieure à 15 bars, une charge nominale supérieure à 20 tonnes et une vitesse maximale de 360 km/h.

Les inventeurs se sont donnés pour objectif d'augmenter la durée de vie sur usure d'un pneumatique d'avion, par une limitation de l'usure différentielle de de la bande de roulement, entre une partie médiane et les parties latérales axialement extérieures à cette partie médiane.

Cet objectif a été atteint, selon l'invention, par un pneumatique d'avion tel que défini dans la revendication 1. La pression pression nommale du pneumatique selon l'invention est supérieure à 9 bars et la flèche sous charge nominale supérieure à 30%, ce pneumatique comprenant une bande de roulement ayant une surface de roulement, une armature de sommet comprenant au moins une couche d'éléments de renforcement, une armature de carcasse comprenant au moins une couche d'éléments de renforcement, lesdites surface de roulement, armature de sommet et armature de carcasse étant respectivement définies géométriquement par des profils méridiens initiaux, le profil méridien initial de l'armature de sommet étant localement concave sur une partie médiane de largeur axiale au moins égale à 0,25 fois la largeur axiale de l'armature de sommet.

Le profil méridien initial de la surface de roulement est la courbe méridienne, obtenue par la coupe de la surface de roulement par un plan méridien, lorsque le pneumatique neuf, c'est-à-dire non encore utilisé, est dans son état initial, c'est-à-dire monté sur sa jante, gonflé à une pression égale à 10% de sa pression nominale, niveau de pression nécessaire à un montage correct du pneumatique sur sa jante, et non chargé.

Le profil méridien gonflé de la surface de roulement est la courbe méridienne, obtenue par la coupe de la surface de roulement par un plan méridien, lorsque le pneumatique neuf, c'est-à-dire non encore utilisé, est dans son état gonflé, c'est-à-dire monté sur sa jante, gonflé à sa pression nominale et non chargé. C'est le profil méridien de la surface de roulement résultant de la déformation du profil méridien initial de la surface de roulement, lorsque le pneumatique passe de son état initial à son état gonflé.

Le profil méridien final de la surface de roulement est la courbe méridienne, obtenue par la coupe de la surface de roulement par un plan méridien, lorsque le pneumatique usé, c'est-à-dire usé jusqu'à un niveau empêchant toute utilisation sur avion et nécessitant son retrait, est dans son état final, c'est-à-dire monté sur sa jante, gonflé à sa pression nominale et non chargé. C'est le profil méridien de la surface de roulement résultant de l'usure du profil méridien gonflé de la surface de roulement.

Tout profil méridien de la surface de roulement, initial, gonflé ou usé est continu et s'appuie sur la bande de roulement, supposée pleine, c'est-à-dire sans prise en compte des sillons circonférentiels. Tout profil méridien de la surface de roulement, initial, gonflé ou usé est symétrique par rapport au plan équatorial et est limité axialement par les points axialement les plus extérieurs de la surface de roulement destinés à venir en contact avec le sol en dernier, lorsque le pneumatique est gonflé à sa pression nominale et écrasé sous sa charge nominale

Un profil méridien de la surface de roulement initial, gonflé ou final est dit localement concave sur une partie médiane de largeur axiale donnée, lorsque, en tout point de ladite partie médiane, continue et symétrique par rapport au plan équatorial, le centre de courbure est positionné radialement à l'extérieur du profil méridien de la surface de roulement et lorsque la flèche relative de cette partie médiane du profil méridien de la surface de roulement est supérieure ou égale à +0,005.

La flèche relative de la partie médiane du profil méridien de la surface de roulement est le rapport de la différence entre la distance radiale des points d'extrémités de la partie médiane du profil méridien de la surface de roulement et la distance radiale du point médian de la partie médiane du profil méridien de la surface de roulement, et de la distance radiale des points d'extrémités de la partie médiane du profil méridien de la surface de roulement.

Les points d'extrémités de la partie médiane du profil méridien de la surface de roulement sont les points du profil méridien de la surface de roulement, limitant axialement la partie médiane, symétriques par rapport au plan équatorial et de même distance radiale.

Le point médian de la partie médiane du profil méridien de la surface de roulement est le point du profil méridien de la surface de roulement, situé dans le plan équatorial.

La flèche relative de la partie médiane du profil méridien de la surface de roulement localement concave dans sa partie médiane est positive, car la distance radiale des points d'extrémités de la partie médiane du profil méridien de la surface de roulement est supérieure à la distance radiale du point médian de la partie médiane du profil méridien de la surface de roulement.

Un profil méridien de la surface de roulement initial, gonflé ou final est dit localement convexe sur une partie médiane de largeur axiale donnée, lorsque, en tout point de ladite partie médiane, continue et symétrique par rapport au plan équatorial, le centre de courbure est positionné radialement à l'intérieur du profil méridien de la surface de roulement et lorsque la flèche relative de cette partie médiane du profil méridien de la surface de roulement est inférieure ou égale à -0,005.

La flèche relative de la partie médiane du profil méridien de la surface de roulement localement convexe est négative, car la distance radiale des points d'extrémités de la partie médiane du profil méridien de la surface de roulement est inférieure à la distance radiale du point médian de la partie médiane du profil méridien de la surface de roulement.

Un profil méridien de la surface de roulement initial, gonflé ou final est dit localement quasi-cylindrique sur une partie médiane de largeur axiale donnée, lorsque, en tout point de ladite partie médiane, continue et symétrique par rapport au plan équatorial, le centre de courbure est positionné soit radialement à l'intérieur, soit radialement à l'extérieur du profil méridien de la surface de roulement et lorsque la flèche relative de cette partie médiane du profil méridien de la surface de roulement est supérieure à -0,005 et inférieure à +0,005.

Un profil méridien de l'armature de sommet est la courbe méridienne, obtenue par la coupe de la couche d'armature de sommet la plus radialement extérieure, par un plan méridien, pour un pneumatique dans un état donné. Il représente la ligne moyenne de la couche d'armature de sommet la plus radialement extérieure, le plus souvent symétrique par rapport au plan équatorial et limitée par les points d'extrémités de ladite couche d'armature de sommet.

Dans le cas d'une armature de sommet comprenant une seule couche d'éléments de renforcement, le profil méridien de l'armature de sommet est le profil méridien de l'unique couche d'armature de sommet.

Dans le cas d'une armature de sommet comprenant plusieurs couches d'éléments de renforcement, le profil méridien de l'armature de sommet est le profil méridien de la couche d'armature de sommet la plus radialement extérieure, les profils méridiens de toutes les autres couches d'armature de sommet radialement intérieures à la précédente étant parallèles audit profil méridien de la couche d'armature de sommet radialement la plus extérieure, sur au moins une partie médiane.

La notion de courbes parallèles, au sens de l'invention, est une généralisation de la notion de droites parallèles : deux courbes, incluses dans un plan méridien, sont parallèles, lorsque l'écart entre les distances radiales de deux points, appartenant respectivement à ces deux courbes et situés sur une même droite radiale de distance axiale donnée, est constant.

Un profil méridien de l'armature de carcasse est la courbe méridienne, obtenue par la coupe de la couche d'armature de carcasse la plus radialement extérieure, par un plan méridien, pour un pneumatique dans un état donné. Il représente la ligne moyenne de la couche d'armature de carcasse la plus radialement extérieure, le plus souvent symétrique par rapport au plan équatorial et limitée par les points d'extrémités de ladite couche d'armature de carcasse.

La définition de profil méridien de l'armature de carcasse, selon que celle-ci comprend une seule couche ou plusieurs couches d'éléments de renforcement, est similaire à celle du profil méridien de l'armature de sommet.

Les notions de profils méridiens initial, gonflé, final, localement convexe, localement concave, localement quasi-cylindrique sur une partie médiane de largeur axiale donnée et de flèche relative, définies pour la surface de roulement, sont applicables aux profils méridiens de l'armature de sommet et de l'armature de carcasse.

Les inventeurs ont su mettre en évidence que l'usure différentielle entre la partie médiane et les parties latérales de la bande de roulement d'un pneumatique usuel résulte de l'abrasion du mélange élastomérique de la bande de roulement, essentiellement au cours des phases d'atterrissage de l'avion. En effet, au moment de l'atterrissage, le pneumatique entre en contact avec le sol par l'intermédiaire de la partie médiane de la surface de roulement, dont le profil méridien gonflé généralement convexe présente une flèche relative usuellement inférieure à -0,03. Avant sa mise en rotation, le pneumatique glisse avec frottement sur le sol, ce qui entraîne une abrasion du matériau élastomérique de la bande de roulement, sur la partie médiane du profil méridien gonflé convexe de la surface de roulement en contact avec le sol. Il en résulte, en fin de vie du pneumatique, une usure plus élevée de la partie médiane de la bande de roulement. De plus, la hauteur d'abrasion du matériau élastomérique de la bande de roulement, dans sa partie médiane, est d'autant plus élevée que la valeur absolue, au sens mathématique, de flèche relative de la partie médiane du profil méridien gonflé convexe de la surface de roulement est élevée.

Selon un premier mode de réalisation de l'invention, les inventeurs ajoutent une surépaisseur de mélange élastomérique, radialement à l'extérieur de la couche d'armature sommet la plus radialement extérieure, sur une partie médiane symétrique par rapport au plan équatorial et de largeur axiale au moins égale à 0,25 fois la largeur axiale d'armature de sommet.

Pour la phase de cuisson du pneumatique, les inventeurs utilisent un moule de cuisson identique à celui du pneumatique usuel, de telle sorte que le profil méridien initial de la surface de roulement du pneumatique de l'invention est identique à celui du pneumatique usuel, généralement convexe.

Cet ajout d'une surépaisseur de mélange élastomérique sur une partie médiane, associé à l'utilisation d'un moule de cuisson identique à celui du pneumatique usuel, conduit à un profil méridien initial de l'armature de sommet localement concave sur ladite partie médiane.

Lors du passage de l'état initial à l'état gonflé du pneumatique, le profil méridien gonflé de l'armature de sommet devient localement quasi-cylindrique sur ladite partie médiane.

Du fait de l'incompressibilité du mélange élastomérique, radialement extérieur à la couche d'armature sommet la plus radialement extérieure, le profil méridien gonflé de la surface de roulement est alors localement convexe sur ladite partie médiane et forme une protubérance dans la partie médiane.

Cette partie médiane convexe de la surface de roulement va être usée en premier lors des atterrissages. Lorsque cette partie médiane convexe de la surface de roulement est usée, le profil méridien gonflé de la surface de roulement est alors localement quasi-cylindrique sur ladite partie médiane et l'usure résultant des atterrissages ultérieurs est alors régulièrement répartie sur la largeur axiale de la surface de roulement, d'où un gain en durée de vie sur usure, par rapport au pneumatique usuel.

Un autre avantage de l'invention, selon ce premier mode de réalisation, est de garantir une meilleure protection des couches d'armature de sommet, en cas d'agressions de la bande de roulement, du fait de la surépaisseur de mélange élastomérique dans la partie médiane.

Un avantage supplémentaire de ce premier mode de réalisation, lié à l'utilisation d'un moule de cuisson identique à celui du pneumatique usuel, est l'absence d'investissement dans un nouveau moule de cuisson, donc de surcoût de fabrication.

Enfin, les inventeurs ont également montré qu'une largeur axiale de la partie médiane du profil méridien initial de l'armature de sommet, au moins égale à 0,25 fois la largeur axiale de l'armature de sommet, est nécessaire pour réaliser un gain en usure.

Selon un deuxième mode de réalisation de l'invention, il est avantageux d'avoir le profil méridien initial de la surface de roulement localement concave sur une partie médiane de même largeur axiale que celle sur laquelle le profil méridien initial de l'armature de sommet est localement concave, et parallèle au profil méridien initial de l'armature de sommet sur cette même largeur axiale. La notion de parallélisme est celle définie précédemment.

Du fait du parallélisme des profils méridiens initiaux respectifs de la surface de roulement et de l'armature de sommet sur une partie médiane, il n'y a pas, comme dans le premier mode de réalisation, de surépaisseur de mélange élastomérique dans la partie médiane.

Lors du passage de l'état initial à l'état gonflé, les profils méridiens gonflés respectifs de la surface de roulement et de l'armature de sommet deviennent localement quasi-cylindriques sur une largeur axiale sensiblement égale à la largeur axiale de la partie médiane sur laquelle les profils méridiens initiaux respectifs de la surface de roulement et de l'armature de sommet sont parallèles.

Par rapport au pneumatique usuel, dans les conditions de pression et de charge nominales, la largeur axiale du profil méridien gonflé de la surface de roulement du pneumatique de l'invention augmente, donc la surface d'abrasion du mélange élastomérique de la bande de roulement augmente, et la pression de contact appliquée sur la surface de roulement diminue. L'augmentation de la surface de roulement et la diminution de la pression de contact contribuent à réduire la hauteur d'abrasion du mélange élastomérique de la bande de roulement, à chaque atterrissage, d'où un plus grand nombre d'atterrissages possible et une augmentation de la durée de vie du pneumatique.

De plus, selon ce deuxième mode de réalisation, le parallélisme entre les profils méridiens initiaux respectifs de la surface de roulement et de l'armature de sommet, sur une partie médiane, évitant une surépaisseur de mélange élastomérique, radialement extérieure à la couche d'armature sommet la plus radialement extérieure, permet un gain en masse du pneumatique de l'invention par rapport au pneumatique selon le premier mode de réalisation de l'invention.

Selon un troisième mode de réalisation, il est avantageux d'avoir le profil méridien initial de l'armature de carcasse localement concave sur une partie médiane de même largeur axiale que celle sur laquelle le profil méridien initial de l'armature de sommet est localement concave, et parallèle au profil méridien initial de l'armature de sommet sur cette même largeur axiale.

Selon une première variante de ce troisième mode de réalisation, le profil méridien initial de la surface de roulement est convexe et identique à celui du pneumatique usuel. Dans cette configuration, le profil méridien gonflé de la surface de roulement est localement convexe sur la partie médiane, comme dans le premier mode de réalisation : on retrouve ainsi les avantages en usure et en coût de moule de cuisson du premier mode de réalisation.

Selon une deuxième variante de ce troisième mode de réalisation, le profil méridien initial de la surface de roulement est localement concave sur la partie médiane sur laquelle les profils méridiens initiaux respectifs de l'armature de sommet et de l'armature de carcasse sont localement concaves, et est parallèle aux profils méridiens initiaux de l'armature de sommet et de l'armature de carcasse. Dans cette configuration, le profil méridien gonflé de la surface de roulement est localement quasi-cylindrique, comme dans le deuxième mode de réalisation : on retrouve alors les avantages en usure et en masse du deuxième mode de réalisation. De plus, cette configuration permet de minimiser l'épaisseur totale de la coupe méridienne du pneumatique, dans les parties d'extrémités de l'armature de sommet, donc de réduire la dissipation thermique dans cette zone et d'augmenter l'endurance du pneumatique. Par ailleurs, un gain supplémentaire en masse de matière est obtenu, du fait du parallélisme des profils méridiens initiaux de la surface de roulement, de l'armature de sommet et de l'armature de carcasse sur la même partie médiane.

Avantageusement encore, selon l'invention, la largeur axiale de la partie médiane, sur laquelle le profil méridien initial de l'armature de sommet est localement concave, est au plus égale à 0,7 fois la largeur axiale de l'armature de sommet. Cette limite supérieure de la largeur axiale de la partie médiane implique des profils méridiens initiaux des couches d'armature de sommet localement convexes ou quasi-cylindriques dans les parties d'extrémités des couches d'armature de sommet. Dans cette configuration, les extrémités de couches d'armature de sommet, dirigées radialement vers ou parallèlement à l'axe de rotation du pneumatique, sont mieux protégées des éventuelles fissures se propageant depuis la bande de roulement, suite à des agressions de ladite bande de roulement.

Il est également avantageux que la flèche relative de la partie médiane du profil méridien initial de l'armature de sommet soit supérieure ou égale à +0,007. Une telle flèche relative permet de garantir la forme géométrique escomptée, localement convexe ou quasi-cylindrique, du profil méridien gonflé de la surface de roulement.

Il est encore avantageux que la flèche relative de la partie médiane du profil méridien initial de l'armature de sommet soit inférieure ou égale à +0,03 et de préférence inférieure ou égale à +0,025. Une telle flèche relative permet de ne pas induire des allongements des éléments de renforcement des couches d'armature de sommet et/ou de carcasse trop élevés, lors du passage de l'état initial à l'état gonflé.

Dans le cas du troisième mode de réalisation comprenant un profil méridien initial de l'armature de carcasse localement concave, il est avantageux d'avoir au moins une couche d'armature de sommet radialement adjacente à une armature de frettage, ladite armature de frettage comprenant au moins une couche d'éléments de renforcement, axialement symétrique par rapport au plan équatorial du pneumatique, et de largeur axiale supérieure ou égale à 0,3 fois la largeur axiale sur laquelle le profil méridien initial de l'armature de carcasse est localement concave. Les couches d'armature de frettage sont des couches d'éléments de renforcement distinctes de celles d'armature de sommet et, par conséquent, n'appartiennent pas à l'armature de sommet. Le passage du profil méridien initial localement concave de l'armature de carcasse au profil méridien gonflé de l'armature de carcasse génère des efforts de surtension dans les éléments de renforcement des couches d'armature de sommet. L'armature de frettage permet de limiter ces efforts de surtension dans les éléments de renforcement des couches d'armature de sommet, maximaux dans la partie médiane localement concave de l'armature de sommet, en participant à la reprise mécanique desdits efforts.

Selon les inventeurs, il est avantageux d'avoir la rigidité d'extension circonférentielle de l'armature de frettage supérieure ou égale à 0,2 fois la rigidité d'extension circonférentielle de la partie médiane d'armature de sommet de largeur axiale égale à la largeur axiale de l'armature de frettage. La rigidité d'extension circonférentielle d'une armature ou d'une partie d'armature est l'effort de traction circonférentielle à appliquer à ladite armature ou partie d'armature pour obtenir un allongement circonférentiel de ladite armature ou partie d'armature égal à 1 mm. La rigidité d'extension circonférentielle de l'armature de frettage doit être d'autant plus élevée que la flèche relative de la partie médiane du profil méridien initial de l'armature de sommet est élevée. La rigidité d'extension circonférentielle globale du sommet est la somme des rigidités d'extension circonférentielles respectives des couches d'armature de sommet et des couches d'armature de frettage.

Pour obtenir le niveau requis de rigidité d'extension circonférentielle de l'armature de frettage, il est avantageux que les éléments de renforcement d'une couche d'armature de frettage soient parallèles entre eux et inclinés, par rapport à la direction circonférentielle, d'un angle compris entre -15° et +15°, et de préférence compris entre -5° et +5°.

Avantageusement encore, les éléments de renforcement des couches d'armature de frettage ont un module d'élasticité supérieur ou égal à 0,7 fois le module d'élasticité des éléments de renforcement des couches d'armature de sommet. Ce choix de module garantit, selon les inventeurs, une contribution efficace des éléments de renforcement des couches d'armature de frettage à la reprise mécanique des efforts de surtension.

Il est également avantageux que les éléments de renforcement des couches d'armature de frettage aient un module d'élasticité inférieur ou égal à 1,3 fois le module d'élasticité des éléments de renforcement des couches d'armature de sommet. Au-delà de cette valeur de module d'élasticité des éléments de renforcement des couches d'armature de frettage, les efforts de surtension sont essentiellement repris par les éléments de renforcement des couches d'armature de frettage, ce qui entraîne une contribution déséquilibrée dans la reprise des efforts de surtension entre les éléments de renforcement des couches d'armature de sommet et les éléments de renforcement des couches d'armature de frettage.

Une position radiale avantageuse de l'armature de frettage est une position radialement intérieure à la couche d'armature de sommet radialement la plus intérieure. Ce choix de conception est compatible avec un procédé de fabrication classique d'un pneumatique sans armature de frettage.

Une armature de frettage radialement extérieure à la couche d'armature de sommet la plus radialement extérieure est également avantageuse, en particulier en terme de simplicité de fabrication et donc de gain économique.

Enfin, une armature de frettage radialement positionnée entre deux couches successives d'armature de sommet est également avantageuse au niveau de l'efficacité de la reprise mécanique des efforts de surtension.

Avantageusement encore, les éléments de renforcement des couches d'armature de carcasse sont parallèles entre eux et orientés sensiblement radialement : l'armature de carcasse du pneumatique est dite radiale.

Il est également avantageux d'avoir les éléments de renforcement des couches d'armature de sommet parallèles entre eux et inclinés, par rapport à la direction circonférentielle, d'un angle compris entre -20° et +20°, et de préférence compris entre -10° et +10°. Lorsque l'angle d'inclinaison des éléments de renforcement des couches d'armature de sommet est compris entre -10° et +10°, ces éléments de renforcement sont dits orientés sensiblement circonférentiellement. Dans le cas d'une armature de sommet comprenant plusieurs couches d'éléments de renforcement, des valeurs d'angle supérieures à 20° en valeur absolue sont envisageables.

Avantageusement encore, les éléments de renforcement des couches d'armature de carcasse sont constitués de matériaux textiles, de préférence de polyamides aliphatiques et/ou de polyamides aromatiques. Les polyamides aliphatiques ou aromatiques sont les matériaux usuellement utilisés dans le domaine technique des pneumatiques d'avion, en particulier en raison de leurs faibles masses volumiques et de leurs propriétés mécaniques.

Il est enfin avantageux d'avoir les éléments de renforcement des couches d'armature de sommet constitués de matériaux textiles, de préférence de polyamides aliphatiques et/ou de polyamides aromatiques, pour leurs faibles masses volumiques et leurs propriétés mécaniques.

Les caractéristiques de l'invention seront mieux comprises à l'aide de la description des figures annexées 1 à 6 :
- la figure 1 présente une vue en coupe dans un plan méridien du sommet d'un pneumatique d'avion, dans son état initial, selon un premier mode de réalisation de l'invention.
- la figure 2 présente une vue en coupe dans un plan méridien du sommet d'un pneumatique d'avion, dans son état initial, selon un deuxième mode de réalisation de l'invention.
- la figure 3 présente une vue en coupe dans un plan méridien du sommet d'un pneumatique d'avion, dans son état initial, selon un troisième mode de réalisation de l'invention.
- la figure 4 présente une vue en coupe dans un plan méridien du sommet d'un pneumatique d'avion, dans son état initial, selon un quatrième mode de réalisation de l'invention.
- la figure 5 présente une vue en coupe dans un plan méridien du sommet d'un pneumatique d'avion, comparant l'état initial à l'état gonflé, selon le mode de réalisation illustré sur la figure 3.
- la figure 6 présente une vue en coupe dans un plan méridien du sommet d'un pneumatique d'avion, comparant l'état initial à l'état gonflé, selon le mode de réalisation illustré sur la figure 4.

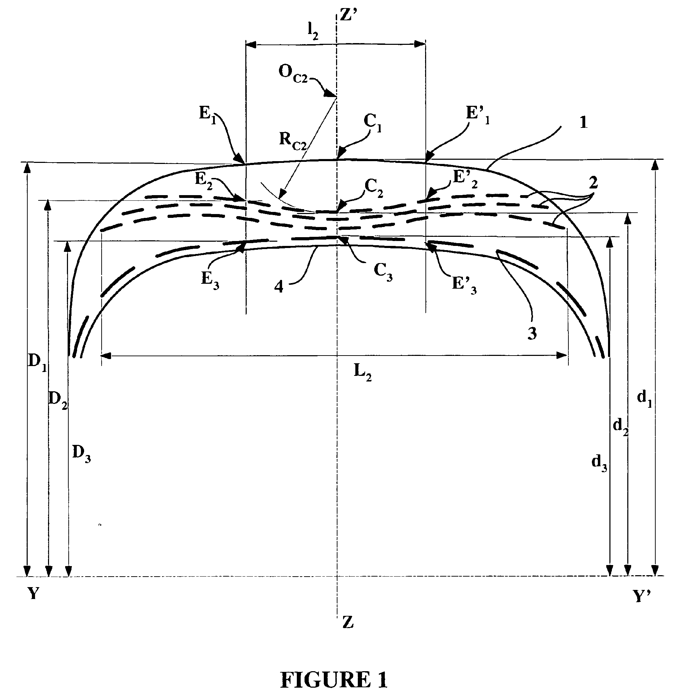

Les figures 1 à 6 ne sont pas représentées à l'échelle pour en faciliter la compréhension.

Sur la figure 1, est représenté, le plus radialement à l'extérieur, le profil méridien initial de la surface de roulement 1. Le point médian C₁ de la partie médiane du profil méridien initial de la surface de roulement 1, situé dans le plan équatorial dont la trace dans le plan méridien est l'axe ZZ', est positionné à la distance radiale d₁, mesurée par rapport à l'axe de rotation YY' du pneumatique. Les points E₁ et E'₁ du profil méridien initial de la surface de roulement 1, symétriques par rapport au plan équatorial et de distance radiale D₁, sont les points d'extrémités de la partie médiane du profil méridien initial de la surface de roulement 1, axialement distants de la largeur axiale l₂, sur laquelle le profil méridien initial de l'armature de sommet 2 est localement concave. Sur la figure 1, le profil méridien initial de la surface de roulement 1 est convexe.

Radialement à l'intérieur du profil méridien initial de la surface de roulement 1, est disposé le profil méridien initial de l'armature de sommet 2, c'est-à-dire le profil méridien initial de la couche d'armature de sommet 2 radialement la plus extérieure, l'armature de sommet étant constituée, dans l'exemple de la figure 1, de trois couches d'armature de sommet 2 superposées. La largeur axiale de l'armature de sommet, correspondant à la largeur axiale maximale de couche d'armature de sommet, est L₂. Le profil méridien initial de l'armature de sommet 2 est localement concave sur la partie médiane de largeur axiale l₂, sur laquelle toutes les couches d'armature de sommet 2 sont parallèles. Le point médian C₂ de la partie médiane du profil méridien initial de l'armature de sommet 2, situé dans le plan équatorial, est positionné à la distance radiale d₂. La concavité du profil méridien initial de l'armature de sommet 2 en C₂ est définie par le centre de courbure O_{C2} et le rayon de courbure R_{C2}. Les points E₂ et E'₂ du profil méridien initial de l'armature de sommet 2, symétriques par rapport au plan équatorial et de distance radiale D₂, sont les points d'extrémités de la partie médiane du profil méridien initial de l'armature de sommet 2, axialement distants de la largeur axiale l₂, sur laquelle le profil méridien initial de l'armature de sommet 2 est localement concave.

Radialement à l'intérieur du profil méridien initial de la couche d'armature de sommet radialement la plus intérieure, est disposé le profil méridien initial de l'armature de carcasse 3. Sur la figure 1, l'armature de carcasse 3 étant constituée d'une seule couche d'armature de carcasse, le profil méridien initial de l'armature de carcasse 3 est le profil méridien initial de la seule couche de carcasse. Le point médian C₃ de la partie médiane du profil méridien initial de l'armature de carcasse 3, situé dans le plan équatorial, est positionné à la distance radiale d₃. Les points E₃ et E'₃ du profil méridien initial de l'armature de carcasse 3, symétriques par rapport au plan équatorial et de distance radiale D₃, sont les points d'extrémités de la partie médiane du profil méridien initial de l'armature de carcasse 3, axialement distants de la largeur axiale l₂, sur laquelle le profil méridien initial de l'armature de sommet 2 est localement concave. Sur la figure 1, le profil méridien initial de l'armature de carcasse 3 est convexe.

Radialement à l'intérieur du profil méridien initial de la couche d'armature de carcasse 3 radialement la plus intérieure, est disposée le profil méridien initial de la surface intérieure 4 du pneumatique, sur laquelle s'applique la pression de gonflage et qui prend la forme du profil méridien initial de l'armature de carcasse 3.

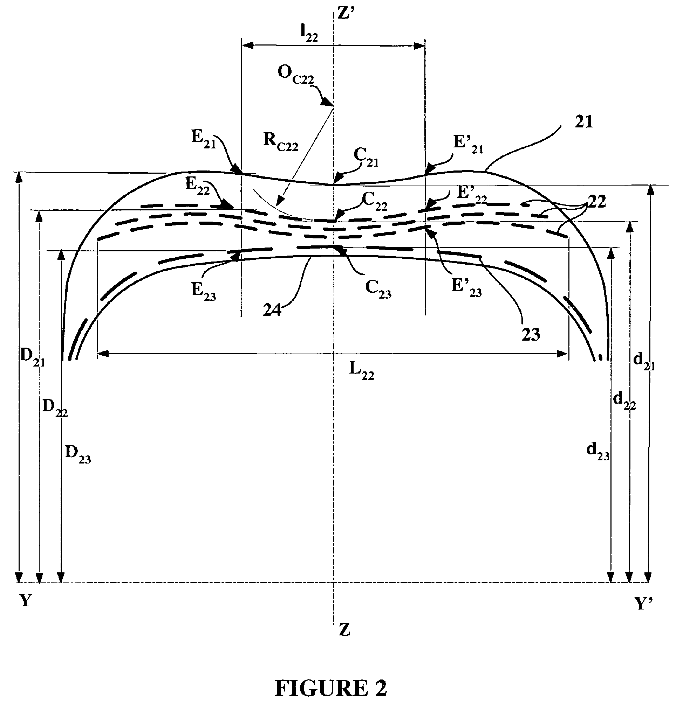

La figure 2 diffère de la figure 1 en ce que le profil méridien initial de la surface de roulement 21 est localement concave sur la partie médiane de largeur axiale l₂₂.

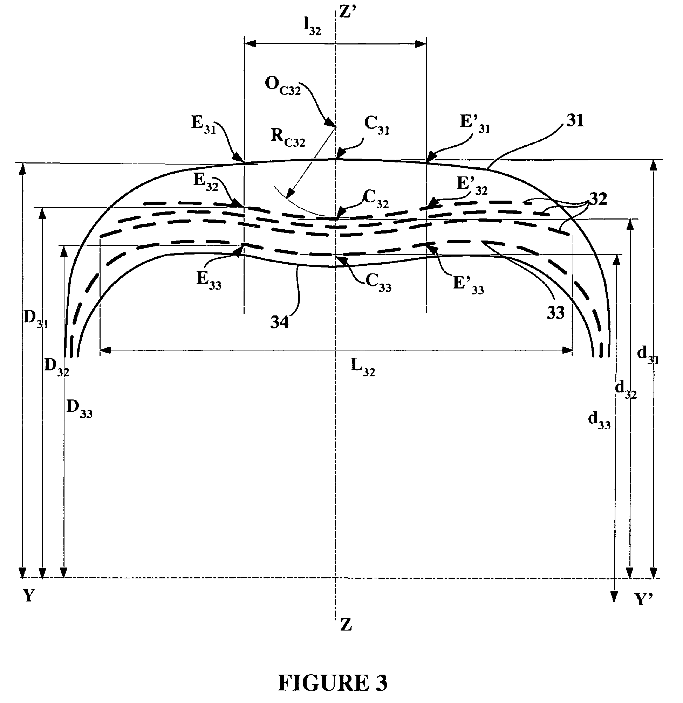

La figure 3 diffère de la figure 1 en ce que le profil méridien initial de l'armature de carcasse 33 est localement concave sur la partie médiane de largeur axiale l₃₂. Le profil méridien initial de la surface intérieure 34 du pneumatique, qui prend la forme de l'armature de carcasse 33, est également localement concave sur la partie médiane de largeur axiale l₃₂.

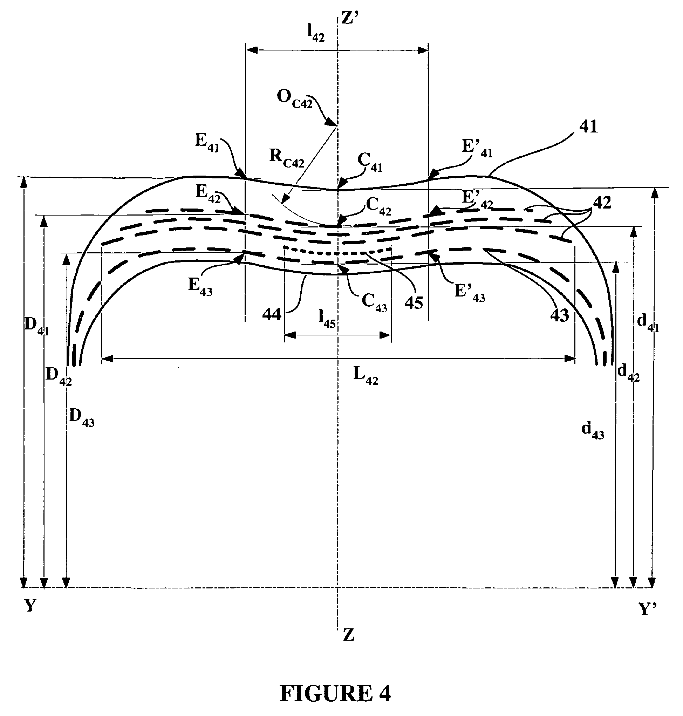

La figure 4 diffère de la figure 3 en ce que le profil méridien initial de la surface de roulement 41 est localement concave sur la partie médiane de largeur axiale l₄₂. De plus une armature de frettage 45, constituée d'une couche d'éléments de renforcement, dont le profil méridien initial a une largeur axiale l₄₅, est positionnée radialement à l'intérieur de la couche d'armature de sommet 42 la plus radialement intérieure.

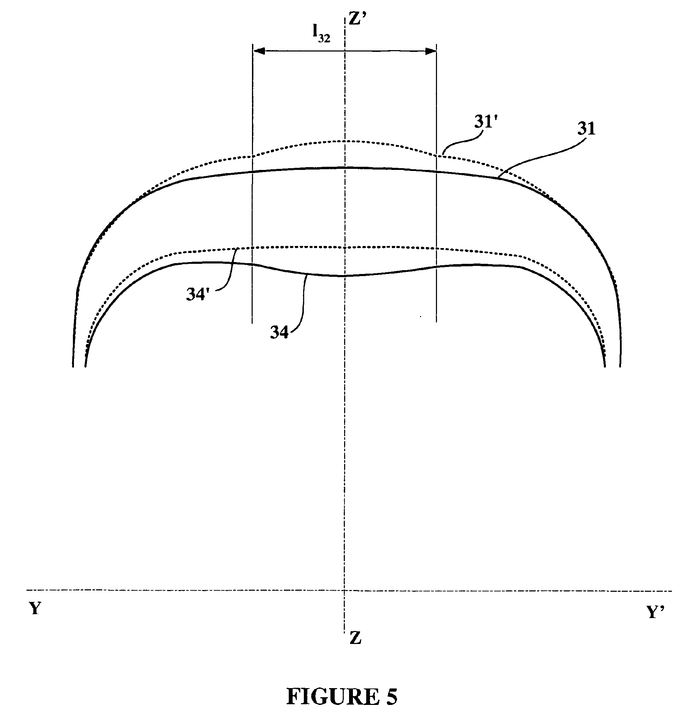

La figure 5 présente l'évolution des profils méridiens initiaux respectifs de la surface de roulement 31 et de la surface intérieure 34 du pneumatique, illustrés sur la figure 3, vers les profils méridiens gonflés respectifs de la surface de roulement 31' et de la surface intérieure 34' du pneumatique. Le profil méridien initial de la surface de roulement 31 convexe évolue vers le profil méridien gonflé de la surface de roulement 31', localement convexe sur la partie médiane de largeur axiale l₃₂. Le profil méridien initial de la surface intérieure 34 du pneumatique, localement concave sur la partie médiane de largeur axiale l₃₂, évolue vers le profil méridien gonflé de la surface intérieure 34' du pneumatique, localement quasi-cylindrique sur la partie médiane de largeur axiale l₃₂. Par souci de clarté de la figure, les profils méridiens initiaux et gonflés de l'armature de sommet et de l'armature de carcasse ne sont pas représentés.

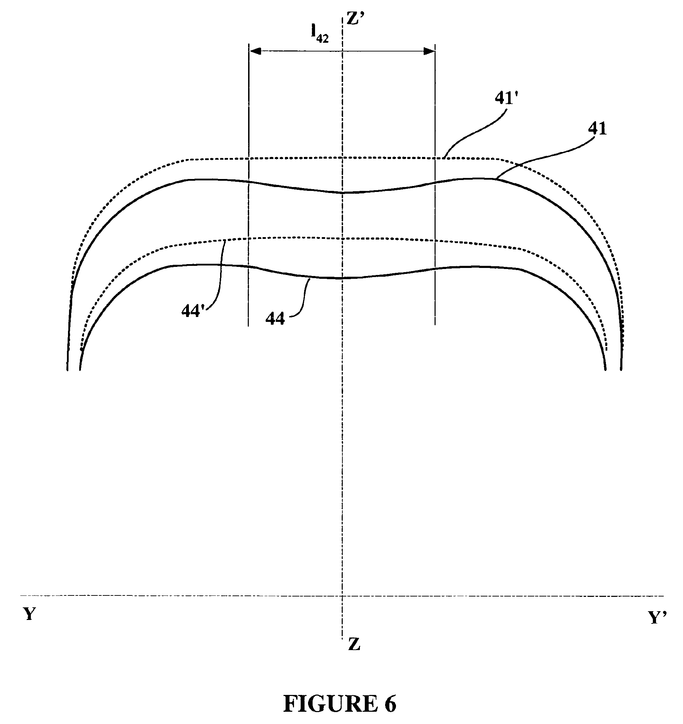

La figure 6 présente l'évolution des profils méridiens initiaux respectifs de la surface de roulement 41 et de la surface intérieure 44 du pneumatique, illustrés sur la figure 4, vers les profils méridiens gonflés respectifs de la surface de roulement 41' et de la surface intérieure 44' du pneumatique. Le profil méridien initial de la surface de roulement 41, localement concave sur la partie médiane de largeur axiale l₄₂, évolue vers le profil méridien gonflé de la surface de roulement 41', localement quasi-cylindrique sur la partie médiane de largeur axiale l₄₂. Le profil méridien initial de la surface intérieure 44 du pneumatique, localement concave sur la partie médiane de largeur axiale l₄₂, évolue vers le profil méridien gonflé de la surface intérieure 44' du pneumatique, localement quasi-cylindrique sur la partie médiane de largeur axiale l₄₂. Par souci de clarté de la figure, les profils méridiens initiaux et gonflés de l'armature de sommet et de l'armature de carcasse ne sont pas représentés.

L'invention a été plus particulièrement étudiée dans le cas d'un pneumatique d'avion de dimension 46x17.0R20, destiné à équiper le train d'atterrissage principal d'un avion de ligne. Pour un tel pneumatique, la pression nominale de gonflage est 15,3 bars, la charge statique nominale 21 tonnes et la vitesse maximale 360 km/h.

Le pneumatique 46x17.0R20 a été conçu conformément à l'invention, selon le mode de réalisation schématisé sur la figure 4, avec des profils méridiens initiaux de la surface de roulement, de l'armature de sommet et de l'armature de carcasse parallèles entre eux et localement concaves sur une partie médiane de largeur axiale l₄₂. Ce pneumatique comprend également une armature de frettage de largeur axiale l₄₅ radialement intérieure à la couche d'armature de sommet radialement la plus intérieure.

La largeur axiale l₄₂ de la partie médiane localement concave du profil méridien initial de l'armature de sommet et la largeur axiale l₄₂ du profil méridien initial de l'armature de sommet étant respectivement égales à 160 mm et à 300 mm, la largeur axiale l₄₂ est égale à 0,53 fois la largeur axiale l₄₂, donc est au moins égale à 0,25 fois la largeur axiale L₄₂.

Dans l'état initial illustré sur la figure 4, les distances radiales du point médian d₄₂ et des points d'extrémités de la partie médiane du profil méridien initial de l'armature de sommet D₄₂ sont respectivement égales à 544 mm et 548 mm. Par conséquent la flèche relative de la partie médiane du profil méridien initial de l'armature de sommet localement concave est égale à +0,0073.

Dans l'état gonflé, les distances radiales du point médian et des points d'extrémités de la partie médiane du profil méridien gonflé de l'armature de sommet sont respectivement égales à 564 mm et 565 mm. Par conséquent la flèche relative de la partie médiane du profil méridien gonflé de l'armature de sommet est égale à +0,0018. Cette valeur confirme que le profil méridien gonflé de l'armature de sommet, et, par conséquent, les profils méridiens gonflés respectifs de la surface de roulement et de l'armature de carcasse qui lui sont parallèles sur la partie médiane de largeur axiale l₄₂, sont localement quasi-cylindriques sur cette partie médiane.

La largeur axiale l₄₅ du profil méridien initial de l'armature de frettage et la largeur axiale l₄₂ de la partie médiane localement concave du profil méridien initial de l'armature de carcasse étant respectivement égales à 55 mm et à 160 mm, la largeur axiale l₄₅ est égale à 0,35 fois la largeur axiale l₄₂, donc au moins égale à 0,3 fois la largeur axiale l₄₂.

Le pneumatique 46x17.0R20, réalisé selon l'invention, comporte des éléments de renforcement des couches d'armature de sommet et d'armature de frettage constitués de matériaux hybrides et des éléments de renforcement des couches d'armature de carcasse constitués de matériaux de type polyamides aliphatiques.

Les inventeurs ont réalisé des tests d'usure comparatifs entre le pneu selon l'invention, précédemment décrit, et le pneu usuel, tel que décrit dans le document EP 1 381 525, c'est-à-dire avec des profils méridiens initiaux de la surface de roulement, de l'armature de sommet et de l'armature de carcasse non localement concaves.

Sur la base des résultats de ces tests d'usure comparatifs, les inventeurs estiment que le pneumatique selon l'invention, par rapport au pneumatique usuel, permet de doubler le nombre d'atterrissages théorique et apporte un gain global de 30% en durée de vie sur usure sur l'ensemble du cycle d'utilisation comprenant les phases d'atterrissage, de roulage et de freinage.

Ce gain en durée de vie sur usure du pneumatique selon l'invention, obtenu grâce à une usure plus régulière de la bande de roulement, présente également un avantage au niveau du rechapage du pneumatique, c'est-à-dire du remplacement de la bande de roulement usée du pneumatique en fin de vie.

Pour un pneumatique usuel en fin de vie, dont la bande de roulement présente une usure différentielle entre la partie médiane et les parties latérales, l'opération de rechapage nécessite le plus souvent, outre l'enlèvement de la bande de roulement usée, l'enlèvement d'une couche d'éléments de renforcement généralement métalliques, appelée couche de protection de l'armature de sommet, radialement intérieure et adjacente au mélange élastomérique de la bande de roulement, ladite couche de protection de l'armature de sommet étant le plus souvent endommagée.

Pour un pneumatique selon l'invention, du fait d'une usure plus régulière sur la largeur axiale de la bande de roulement, l'enlèvement de la couche de protection de l'armature de sommet n'est plus nécessaire, du fait de son intégrité en fin de vie du pneumatique : d'où un gain économique sur l'opération de rechapage.

Pour garantir l'intégrité de la couche de protection de l'armature de sommet, il peut être avantageux de disposer, radialement à l'extérieur de ladite couche de protection, une couche de mélange élastomérique de couleur, dont l'apparition progressive, au cours de l'usure de la bande de roulement, témoigne de la proximité de la couche de protection de l'armature de sommet et indique la nécessité de retrait du pneumatique, pour le soumettre à une opération éventuelle de rechapage.

L'invention ne doit pas être interprétée comme étant limitée aux exemples illustrés sur les figures mais peut être étendue à d'autres variantes de réalisation, par exemple, relatives aux matériaux constitutifs des éléments de renforcement des couches d'armature de sommet et/ou de carcasse : de manière non limitative, le carbone, le verre...

## Revendications

1. Pneumatique d'avion, dont la pression nominale est supérieure à 9 bars et la flèche sous charge nominale supérieure à 30%, comprenant une bande de roulement ayant une surface de roulement (31, 41), une armature de sommet (32, 42) radialement intérieure à la surface de roulement et comprenant au moins une couche d'éléments de renforcement, une armature de carcasse (33, 43) radialement intérieure à l'armature de sommet et comprenant au moins une couche d'éléments de renforcement, lesdites surface de roulement (31, 41), armature de sommet (32, 42) et armature de carcasse (33, 43) étant respectivement définies géométriquement par des profils méridiens initiaux lorsque le pneumatique est monté sur sa jante, gonflé à une pression égale à 10% de sa pression nominale et est non chargé, les profils méridiens initiaux respectifs de l'armature de sommet (32, 42) et de l'armature de carcasse (33, 43) étant localement concaves sur une partie médiane de largeur axiale (l₃₂, l₄₂), et le profil méridien initial de l'armature de carcasse (33, 43) étant parallèle au profil méridien initial de l'armature de sommet (32, 42) sur cette même largeur axiale (l₃₂, l₄₂), **caractérisé en ce que** la largeur axiale (l₃₂, l₄₂) de la partie médiane est au moins égale à 0,25 fois la largeur axiale (L₃₂, L₄₂) de l'armature de sommet (32, 42), **en ce qu'**au moins une couche d'armature de sommet (42) est radialement adjacente à une armature de frettage (45), comprenant au moins une couche d'éléments de renforcement parallèles entre eux et inclinés, par rapport à la direction circonférentielle du pneumatique, d'un angle compris entre -15° et +15°, et **en ce que** l'armature de frettage (45), axialement symétrique par rapport au plan équatorial du pneumatique, a une largeur axiale (l₄₅) supérieure ou égale à 0,3 fois la largeur axiale (l₄₂) de la partie médiane.

2. Pneumatique selon la revendication 1, **caractérisé en ce que** le profil méridien initial de la surface de roulement (21, 41) est localement concave sur une partie médiane de même largeur axiale (l₂₂, l₄₂) que celle sur laquelle le profil méridien initial de l'armature de sommet (22, 42) est localement concave, et **en ce qu'**il est parallèle au profil méridien initial de l'armature de sommet (22, 42) sur cette même largeur axiale (l₂₂, l₄₂).

3. Pneumatique selon l'une des revendications 1 ou 2, **caractérisé en ce que** la largeur axiale (l₃₂, l₄₂) de la partie médiane, sur laquelle le profil méridien initial de l'armature de sommet (32, 42) est localement concave, est au plus égale à 0,7 fois la largeur axiale (L₃₂, L₄₂) de l'armature de sommet.

4. Pneumatique selon l'une quelconque des revendications 1 à 3, **caractérisé en ce que** la flèche relative de la partie médiane du profil méridien initial de l'armature de sommet (32, 42) est supérieure ou égale à +0,007.

5. Pneumatique selon l'une quelconque des revendications 1 à 4, **caractérisé en ce que** la flèche relative de la partie médiane du profil méridien initial de l'armature de sommet (32, 42) est inférieure ou égale à +0,03 et de préférence inférieure ou égale à +0,025.

6. Pneumatique selon l'une quelconque des revendications 1 à 5, **caractérisé en ce que** les éléments de renforcement des couches d'armature de frettage (45) sont inclinés, par rapport à la direction circonférentielle du pneumatique, d'un angle compris entre -5° et +5°.

7. Pneumatique selon l'une quelconque des revendications 1 à 6, **caractérisé en ce que** les éléments de renforcement des couches d'armature de frettage (45) ont un module d'élasticité supérieur ou égal à 0,7 fois le module d'élasticité des éléments de renforcement des couches d'armature de sommet (42).

8. Pneumatique selon l'une quelconque des revendications 1 à 7, **caractérisé en ce que** les éléments de renforcement des couches d'armature de frettage (45) ont un module d'élasticité inférieur ou égal à 1,3 fois le module d'élasticité des éléments de renforcement des couches d'armature de sommet (42).

9. Pneumatique selon l'une quelconque des revendications 1 à 8, **caractérisé en ce que** l'armature de frettage (45) est radialement intérieure à la couche d'armature de sommet (42) radialement la plus intérieure.

10. Pneumatique selon l'une quelconque des revendications 1 à 8, **caractérisé en ce que** l'armature de frettage (45) est radialement extérieure à la couche d'armature de sommet (42) radialement la plus extérieure.

11. Pneumatique selon l'une quelconque des revendications 1 à 8, **caractérisé en ce que** l'armature de frettage (45) est radialement positionnée entre deux couches successives d'armature de sommet (42).

12. Pneumatique selon l'une quelconque des revendications 1 à 11, **caractérisé en ce que** les éléments de renforcement des couches d'armature de sommet (32, 42) sont parallèles entre eux et inclinés, par rapport à la direction circonférentielle, d'un angle compris entre -20° et +20°, et de préférence compris entre -10° et +10°.

13. Pneumatique selon l'une quelconque des revendications 1 à 12, **caractérisé en ce que** les éléments de renforcement des couches d'armature de carcasse (33, 43) sont constitués de matériaux textiles, de préférence de polyamides aliphatiques et/ou de polyamides aromatiques.

14. Pneumatique selon l'une quelconque des revendications 1 à 13, **caractérisé en ce que** les éléments de renforcement des couches d'armature de sommet (32, 42) sont constitués de matériaux textiles, de préférence de polyamides aliphatiques et/ou de polyamides aromatiques.

15. Pneumatique selon l'une quelconque des revendications 1 à 14, **caractérisé en ce que** les éléments de renforcement des couches d'armature de frettage (45) sont constitués de matériaux textiles, de préférence de polyamides aliphatiques et/ou de polyamides aromatiques.

## Claims

1. Aeroplane tyre, whose rated pressure is more than 9 bar and whose deflection under rated load is more than 30%, comprising a tread having a tread surface (31, 41), a crown reinforcement (32, 42) radially inward of the tread surface and comprising at least one layer of reinforcing elements, a carcass reinforcement (33, 43) radially inward of the crown reinforcement and comprising at least one layer of reinforcing elements, said tread surface (31, 41), said crown reinforcement (32, 42) and said carcass reinforcement (33, 43) being defined geometrically by respective initial meridian profiles when the tyre is mounted on its rim, inflated to a pressure equal to 10% of its rated pressure and is not loaded, the respective initial meridian profiles of the crown reinforcement (32, 42) and of the carcass reinforcement (33, 43) being locally concave across a central part having an axial width (l₃₂, l₄₂), and the initial meridian profile of the carcass reinforcement (33, 43) being parallel to the initial meridian profile of the crown reinforcement (32, 42) across this same axial width (l₃₂, l₄₂), **characterized in that** the axial width (l₃₂, l₄₂) of the central part is at least equal to 0.25 times the axial width (L₃₂, L₄₂) of the crown reinforcement (32, 42), **in that** at least one crown reinforcement layer (42) is radially adjacent to a hooping reinforcement (45), comprising at least one layer of reinforcing elements that are parallel to each other and inclined, with respect to the circumferential direction of the tyre, at an angle of between -15° and +15°, and **in that** the hooping reinforcement (45), which is axially symmetrical about the equatorial plane of the tyre, has an axial width (l₄₅) greater than or equal to 0.3 times the axial width (l₄₂) of the central part.

2. Tyre according to Claim 1, **characterized in that** the initial meridian profile of the tread surface (21, 41) is locally concave across a central part whose axial width (l₂₂, l₄₂) is the same as that across which the initial meridian profile of the crown reinforcement (22, 42) is locally concave, and **in that** it is parallel to the initial meridian profile of the crown reinforcement (22, 42) across this same axial width (l₂₂, l₄₂).

3. Tyre according to either of Claims 1 and 2, **characterized in that** the axial width (l₃₂, l₄₂) of the central part, across which the initial meridian profile of the crown reinforcement (32, 42) is locally concave, is less than or equal to 0.7 times the axial width (L₃₂, L₄₂) of the crown reinforcement.

4. Tyre according to any of Claims 1 to 3, **characterized in that** the relative deflection of the central part of the initial meridian profile of the crown reinforcement (32, 42) is greater than or equal to +0.007.

5. Tyre according to any of Claims 1 to 4, **characterized in that** the relative deflection of the central part of the initial meridian profile of the crown reinforcement (32, 42) is less than or equal to +0.03 and preferably less than or equal to +0.025.

6. Tyre according to any one of Claims 1 to 5, **characterized in that** the reinforcing elements of the hooping reinforcement layers (45) are inclined, with respect to the circumferential direction of the tyre, at an angle of between -5° and +5°.

7. Tyre according to any one of Claims 1 to 6, **characterized in that** the reinforcing elements of the hooping reinforcement layers (45) have an elastic modulus greater than or equal to 0.7 times the elastic modulus of the reinforcing elements of the crown reinforcement layers (42).

8. Tyre according to any one of Claims 1 to 7, **characterized in that** the reinforcing elements of the hooping reinforcement layers (45) have an elastic modulus less than or equal to 1.3 times the elastic modulus of the reinforcing elements of the crown reinforcement layers (42).

9. Tyre according to any one of Claims 1 to 8, **characterized in that** the hooping reinforcement (45) is radially inward of the radially innermost crown reinforcement layer (42).

10. Tyre according to any one of Claims 1 to 8, **characterized in that** the hooping reinforcement (45) is radially outward of the radially outermost crown reinforcement layer (42).

11. Tyre according to any one of Claims 1 to 8, **characterized in that** the hooping reinforcement (45) is positioned radially between two successive crown reinforcement layers (42).

12. Tyre according to any one of Claims 1 to 11, **characterized in that** the reinforcing elements of the crown reinforcement layers (32, 42) are parallel to each other and inclined, with respect to the circumferential direction, at an angle of between -20° and +20°, and preferably of between -10° and +10°.

13. Tyre according to any one of Claims 1 to 12, **characterized in that** the reinforcing elements of the carcass reinforcement layers (33, 43) are made of textile materials, preferably aliphatic polyamides and/or aromatic polyamides.

14. Tyre according to any one of Claims 1 to 13, **characterized in that** the reinforcing elements of the crown reinforcement layers (32, 42) are made of textile materials, preferably aliphatic polyamides and/or aromatic polyamides.

15. Tyre according to any one of Claims 1 to 14, **characterized in that** the reinforcing elements of the hooping reinforcement layers (45) are made of textile materials, preferably aliphatic polyamides and/or aromatic polyamides.

## Patentansprüche

1. Flugzeugreifen, dessen Nenndruck höher als 9 Bar und die Einfederung unter Nennlast höher als 30% ist, der einen Laufstreifen mit einer Lauffläche (31, 41), eine Scheitelbewehrung (32, 42), die bezüglich der Lauffläche radial innen liegt und mindestens eine Schicht von Verstärkungselementen enthält, und eine Karkassenbewehrung (33, 43) enthält, die bezüglich der Scheitelbewehrung radial innen liegt und mindestens eine Schicht von Verstärkungselementen enthält, wobei die Lauffläche (31, 41), die Scheitelbewehrung (32, 42) und die Karkassenbewehrung (33, 43) je geometrisch durch Anfangsaxialprofile definiert sind, wenn der Reifen auf seine Felge montiert, auf einen Druck gleich 10% seines Nenndrucks aufgepumpt und nicht belastet ist, wobei die Anfangsaxialprofile der Scheitelbewehrung (32, 42) bzw. der Karkassenbewehrung (33, 43) über einen Mittelbereich axialer Breite (l₃₂, l₄₂) lokal konkav sind und das Anfangsaxialprofil der Karkassenbewehrung (33, 43) zum Anfangsaxialprofil der Scheitelbewehrung (32, 42) über diese gleiche axiale Breite (l₃₂, l₄₂) parallel ist, **dadurch gekennzeichnet, dass** die axiale Breite (l₃₂, l₄₂) des Mittelbereichs mindestens gleich 0,25 Mal die axiale Breite (L₃₂, L₄₂) der Scheitelbewehrung (32, 42) ist, dass mindestens eine Scheitelbewehrungsschicht (42) radial einer Bandagierungsbewehrung (45) benachbart ist, die mindestens eine Schicht von zueinander parallelen und bezüglich der Umfangsrichtung des Reifens um einen Winkel zwischen -15° und +15° geneigten Verstärkungselementen enthält, und dass die Bandagierungsbewehrung (45), die axial bezüglich der Äquatorialebene des Reifens symmetrisch ist, eine axiale Breite (l₄₅) größer als oder gleich 0,3 Mal die axiale Breite (l₄₂) des Mittelbereichs hat.

2. Reifen nach Anspruch 1, **dadurch gekennzeichnet, dass** das Anfangsaxialprofil der Lauffläche (21, 41) über einen Mittelbereich lokal konkav ist, der die gleiche axiale Breite (l₂₂, l₄₂) wie diejenige hat, über die das Anfangsaxialprofil der Scheitelbewehrung (22, 42) lokal konkav ist, und dass es über diese gleiche axiale Breite (l₂₂, l₄₂) parallel zum Anfangsaxialprofil der Scheitelbewehrung (22, 42) ist.

3. Reifen nach einem der Ansprüche 1 oder 2, **dadurch gekennzeichnet, dass** die axiale Breite (l₃₂, l₄₂) des Mittelbereichs, über die das Anfangsaxialprofil der Scheitelbewehrung (32, 42) lokal konkav ist, höchstens gleich 0,7 Mal die axiale Breite (L₃₂, L₄₂) der Scheitelbewehrung ist.

4. Reifen nach einem der Ansprüche 1 bis 3, **dadurch gekennzeichnet, dass** die relative Einfederung des Mittelbereichs des Anfangsaxialprofils der Scheitelbewehrung (32, 42) größer als oder gleich +0,007 ist.

5. Reifen nach einem der Ansprüche 1 bis 4, **dadurch gekennzeichnet, dass** die relative Einfederung des Mittelbereichs des Anfangsaxialprofils der Scheitelbewehrung (32, 42) geringer als oder gleich +0,03 und vorzugsweise geringer als oder gleich +0,025 ist.

6. Reifen nach einem der Ansprüche 1 bis 5, **dadurch gekennzeichnet, dass** die Verstärkungselemente der Bandagierungsbewehrungsschichten (45) bezüglich der Umfangsrichtung des Reifens um einen Winkel zwischen -5° und +5° geneigt sind.

7. Reifen nach einem der Ansprüche 1 bis 6, **dadurch gekennzeichnet, dass** die Verstärkungselemente der Bandagierungsbewehrungsschichten (45) einen Elastizitätsmodul haben, der größer als oder gleich 0,7 Mal der Elastizitätsmodul der Verstärkungselemente der Scheitelbewehrungsschichten ist (42).

8. Reifen nach einem der Ansprüche 1 bis 7, **dadurch gekennzeichnet, dass** die Verstärkungselemente der Bandagierungsbewehrungsschichten (45) einen Elastizitätsmodul haben, der geringer als oder gleich 1,3 Mal der Elastizitätsmodul der Verstärkungselemente der Scheitelbewehrungsschichten (42) ist.

9. Reifen nach einem der Ansprüche 1 bis 8, **dadurch gekennzeichnet, dass** die Bandagierungsbewehrung (45) bezüglich der radial am weitesten innen liegenden Scheitelbewehrungsschicht (42) radial innen liegt.

10. Reifen nach einem der Ansprüche 1 bis 8, **dadurch gekennzeichnet, dass** die Bandagierungsbewehrung (45) bezüglich der radial am weitesten außen liegenden Scheitelbewehrungsschicht (42) radial außen liegt.

11. Reifen nach einem der Ansprüche 1 bis 8, **dadurch gekennzeichnet, dass** die Bandagierungsbewehrung (45) radial zwischen zwei aufeinanderfolgenden Scheitelbewehrungsschichten (42) positioniert ist.

12. Reifen nach einem der Ansprüche 1 bis 11, **dadurch gekennzeichnet, dass** die Verstärkungselemente der Scheitelbewehrungsschichten (32, 42) parallel zueinander und bezüglich der Umfangsrichtung um einen Winkel geneigt sind, der zwischen -20° und +20°, und vorzugsweise zwischen -10° et +10° liegt.

13. Reifen nach einem der Ansprüche 1 bis 12, **dadurch gekennzeichnet, dass** die Verstärkungselemente der Karkassenbewehrungsschichten (33, 43) aus textilen Materialien bestehen, Vorzugsweise aus aliphatischen Polyamiden und/oder aromatischen Polyamiden.

14. Reifen nach einem der Ansprüche 1 bis 13, **dadurch gekennzeichnet, dass** die Verstärkungselemente der Scheitelbewehrungsschichten (32, 42) aus textilen Materialien bestehe n , vorzugsweise aus aliphatischen Polyamiden und/oder aromatischen Polyamiden.

15. Reifen nach einem der Ansprüche 1 bis 14, **dadurch gekennzeichnet, dass** die Verstärkungselemente der Bandagierungsbewehrungsschichten (45) aus textilen Materialien bestehen, vorzugsweise aus aliphatischen Polyamiden und/oder aromatischen Polyamiden.
